(19) **Europäisches Patentamt European Patent Office Office européen des brevets**

(11) **EP 4 708 199 A1**

(12) **EUROPEAN PATENT APPLICATION**

(43) Date of publication:
11.03.2026 Bulletin 2026/11

(21) Application number: 25200282.9

(22) Date of filing: 04.09.2025

(51) International Patent Classification (IPC):
*G06T 11/00* (2026.01)    *G06T 13/80* (2011.01)

(52) Cooperative Patent Classification (CPC):
G06T 11/00; G06T 13/80; H04N 7/0127

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.09.2024 SG 10202402759

(71) Applicant: Lemon Inc.
Grand Cayman, KY1-1205 (KY)

(72) Inventors:
• BAI, Song
018960 Singapore (SG)
• YANG, Zuhao
018960 Singapore (SG)
• YU, Yingchen
018960 Singapore (SG)

(74) Representative: Marks & Clerk LLP
15 Fetter Lane
London EC4A 1BW (GB)

(54) **METHOD, DEVICE, AND MEDIUM FOR GENERATING TRANSITION VIDEOS WITH DIFFUSION MODEL**

(57)    Implementations of the present disclosure provide a method, device, and medium for generating transition videos with a diffusion model. The method comprises obtaining a start frame (112) and an end frame (122) for the video (132), a first caption (114) of the start frame, and a second caption (124) of the end frame. The method further comprises generating a first latent noise (116) in a latent space based on the start frame and a second latent noise (124) in the latent space based on the end frame. The method further comprises generating third latent noises (128) in the latent space corresponding to transition frames (130) based on the first latent noise and the second latent noise. In addition, the method further comprises generating, by utilizing a pre-trained image-to-video diffusion model (104), the transition frames based on the third latent noises, the start frame, the end frame, the first caption, and the second caption.

*FIG. 1*

EP 4 708 199 A1

**Description**

**BACKGROUND**

A diffusion model is a type of generative model used in machine learning, particularly for tasks like image synthesis, de-noising, and other data generation tasks. The core idea of a diffusion model is to model the process of data generation as a gradual transformation from noise to a structured data point, such as an image. This is achieved through a process that simulates diffusion, where the data is progressively refined from a noisy state to a clear, recognizable state.

A transition video refers to a video that is specifically designed to serve as a smooth link or bridge between two different scenes, shots, or pieces of content. Transition videos are commonly used in video editing, filmmaking, and multimedia presentations to enhance the visual flow and coherence between disparate elements, ensuring that the shift from one scene or concept to another is seamless and visually appealing.

**SUMMARY**

In a first aspect according to some implementations of the present disclosure, a method for generating a video is provided. The method comprises obtaining a start frame and an end frame for the video, a first caption of the start frame, and a second caption of the end frame. The method further comprises generating a first latent noise in a latent space based on the start frame and a second latent noise in the latent space based on the end frame. The method further comprises generating third latent noises in the latent space corresponding to transition frames based on the first latent noise and the second latent noise. In addition, the method further comprises generating, by utilizing a pre-trained image-to-video diffusion model, the transition frames based on the third latent noises, the start frame, the end frame, the first caption, and the second caption.

In a second aspect according to some implementations of the present disclosure, an electronic device comprising a memory and a processor is provided. The memory is configured to store computer instructions which, when executed by the processor, cause the processor to obtain a start frame and an end frame for the video, a first caption of the start frame, and a second caption of the end frame. The instructions further cause the processor to generate a first latent noise in a latent space based on the start frame and a second latent noise in the latent space based on the end frame. The instructions further cause the processor to generate third latent noises in the latent space corresponding to transition frames based on the first latent noise and the second latent noise. In addition, the instructions further cause the processor to generate, by utilizing a pre-trained image-to-video diffusion model, the transition frames based on the third latent noises, the start frame, the end frame, the first caption, and the second caption.

In a third aspect according to some implementations of the present disclosure, a non-transitory computer-readable medium is provided. The medium comprises instructions stored thereon which, when executed by a processor, cause the processor to obtain a start frame and an end frame for the video, a first caption of the start frame, and a second caption of the end frame. The instructions further cause the processor to generate a first latent noise in a latent space based on the start frame and a second latent noise in the latent space based on the end frame. The instructions further cause the processor to generate third latent noises in the latent space corresponding to transition frames based on the first latent noise and the second latent noise. In addition, the instructions further cause the processor to generate, by utilizing a pre-trained image-to-video diffusion model, the transition frames based on the third latent noises, the start frame, the end frame, the first caption, and the second caption.

Any of the one or more above aspects in combination with any other of the one or more aspects. Any of the one or more aspects as described herein. This Summary is provided to introduce a selection of concepts in a simplified form, which is further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

**BRIEF DESCRIPTION OF THE DRAWINGS**

Implementations of the present disclosure may be understood from the following Detailed Description when read with the accompanying figures. In accordance with the standard practice in the industry, various features are not drawn to scale. In fact, the dimensions of the various features may be arbitrarily increased or reduced for clarity of discussion. Some examples of the present disclosure are described with reference to the following figures.

FIG. 1 illustrates an example environment in which example implementations of the present disclosure may be implemented;

FIG. 2 is a flow chart illustrating an example process of generating a video according to some implementations of the present disclosure;

FIG. 3 is a schematic diagram illustrating an example framework for generating a video according to some implementations of the present disclosure;

FIG. 4 is a schematic diagram illustrating an example of generating latent noises for the transition frames and feeding the latent noises into a de-noising U-Net model according to some implementations of the present disclosure;

FIG. 5 is a schematic diagram illustrating an example process of generating latent noises for the transition frames according to some implementations of the present disclosure;

FIG. 6 is a schematic diagram illustrating an example of integrating low-rank adaption parameters for the transition frames into a de-noising U-Net model according to some implementations of the present disclosure;

FIG. 7 is a schematic diagram illustrating an example of integrating text embeddings for the transition frames into the de-noising U-Net model according to some implementations of the present disclosure;

FIGS. 8A-8D are schematic diagrams illustrating examples of multiple transition tasks according to some implementations of the present disclosure; and

FIG. 9 is a block diagram illustrating physical components (for example hardware) of an electronic device with which aspects of the present disclosure may be practiced.

## DETAILED DESCRIPTION

In the following detailed description, references are made to the accompanying drawings that form a part hereof, and in which are shown by way of illustrations specific aspects or examples. These aspects may be combined, other aspects may be utilized, and structural changes may be made without departing from the present disclosure. Aspects may be practiced as methods, systems or devices. Accordingly, aspects may take the form of a hardware implementation, an entirely software implementation, or an implementation combining software and hardware aspects. The following detailed description is therefore not to be taken in a limiting sense, and the scope of the present disclosure is defined by the appended claims and their equivalents. A plurality of steps recorded in method implementations in the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are an open-ended inclusion, namely, "including but not limited to". The term "based on" is interpreted as "at least partially based on". The term "an embodiment" means "at least one embodiment"; the term "another embodiment" means "at least one additional embodiment"; and the term "some embodiments" means "at least some embodiments". The related definitions of other terms will be provided in the subsequent description. Concepts such as "first" and "second" mentioned in the present disclosure are only for distinguishing different apparatuses, modules, or units, and are not intended to limit the order or relation of interdependence of functions performed by these apparatuses, modules, or units. Variants of "one" and "a plurality of" mentioned in the present disclosure are illustrative and not restrictive, and those skilled in the art should understand that unless otherwise explicitly specified in the context, the modifiers should be understood as "one or more". The names of messages or information exchanged between apparatuses in the implementations of the present disclosure are provided for illustrative purposes only, and are not used to limit the scope of these messages or information. Data (including the data itself, and data acquisition, or usage) involved in the technical solutions should comply with the requirements of corresponding laws and regulations, and relevant stipulations.

The success of diffusion models in image synthesis has sparked numerous related schemes on diffusion-based video synthesis. Leveraging textual prompts, video frames, structure maps, and even motion patterns, several related schemes have demonstrated impressive results by automatically generating realistic and high-fidelity videos. However, generating high-quality transition videos, which involves using the given start and end frames as well as text prompts as initial guidance to generate intermediate transition frames, remains largely underexplored.

Creating realistic transition videos is a complex task. A high-quality transition generator should meet at least four criteria: 1) semantic consistency with the input frames; 2) high fidelity to the input frames; 3) smoothness across the generated frames; and 4) alignment with the provided text prompts. Furthermore, research in transition generation often relies on self-collected, well-curated videos that are not publicly accessible, further hindering advancements in this area.

Most existing related schemes address the challenge of transition generation using two approaches. The first approach focuses on morphing, given two images of topologically similar objects. Recent schemes employ various deep interpolation techniques to generate plausible object-level transitions. However, these schemes produce intermittent images rather than temporally coherent video frames, leading to a loss of smoothness, particularly when handling moving objects. The second approach focuses on video frame interpolation. Most related schemes in this category attempt to estimate intermediate optical flows or leverage frame conditioning during training. However, this approach often generates implausible object transitions with abrupt content changes, struggle with producing long transition sequences, and require time-consuming training on large-scale motion video datasets.

Therefore, the implementations of the present disclosure provide a scheme for generating a video. In this scheme, a computing device may obtain a start frame and an end frame for the video, a first caption of the start frame, and a second caption of the end frame. The computing device may generate a first latent noise in a latent space based on the start frame and a second latent noise in the latent space based on the end frame. Then, the computing device may generate third latent noises in the latent space corresponding to transition frames based on the first latent noise and the second latent noise. Consequently, the computing device may generate, by utilizing a pre-trained image-to-video diffusion model, the transition frames based on the third latent noises, the start frame, the end frame, the first caption, and the second caption.

In this way, the latent noises for generating the transition frames can include information of the start frame and information of the end frame. Thus, the smoothness of the generated transition frames can be improved, and the randomness and discontinuity of the generated transition frames can be reduced. Furthermore, by utilizing a pre-trained image-to-video diffusion model, this scheme does not need a training process or a fun-tuning process, thereby the appearance and motion prior of the pre-trained model can be preserved.

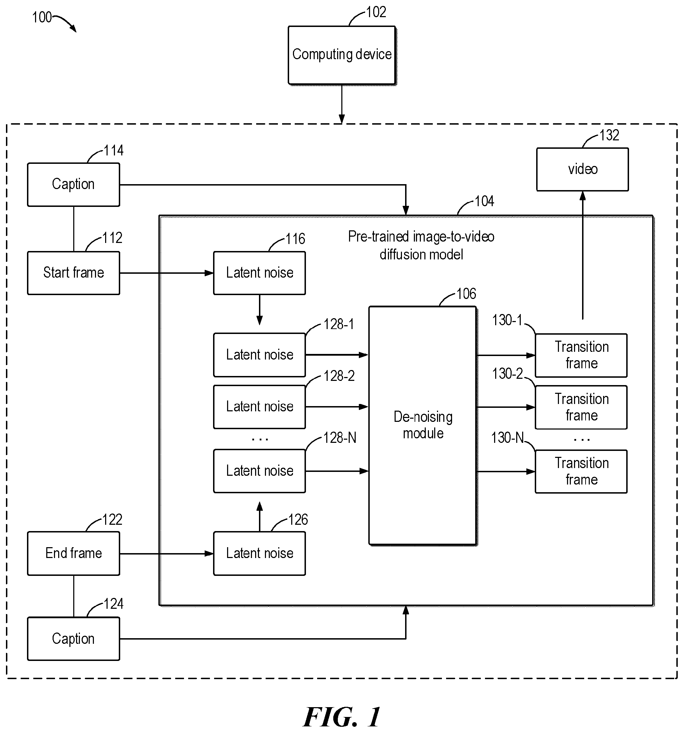

FIG. 1 illustrates an example environment 100 in which example implementations of the present disclosure may be implemented. As shown in FIG. 1, the environment 100 includes a computing device 102. The computing device 102 may be any device with computing capability. For example, the computing device 102 may include, but are not limited to, personal computers, server computers, handheld or laptop devices, mobile devices (such as mobile phones, personal digital assistants (PDAs), media players, etc.), multiprocessor systems, consumer electronics, computer wearable electronic devices, smart home devices, minicomputers, mainframe computers, edge computing devices, distributed computing environments including any of the above systems or devices, etc.

As shown in FIG. 1, a pre-trained image-to-video diffusion model 104 may be deployed on the computing device 102. The diffusion model 104 is a generative model that has been trained on a large dataset to generate a video frame sequence based on one or more images. The diffusion model 104 may leverage the principles of diffusion models, which progressively refine noisy inputs into high-quality outputs. In the environment 100, the diffusion model 140 may receive a start frame 112, a caption 114 of the start frame 112, an end frame 122, and a caption 124 of the end frame 122. Then, the diffusion model 140 may generate a sequence of transition frames 130-1, 130-2, ..., and 130-N (also collectively referred to as transition frames 130) that form a coherent video 132. The video 132 may be formed with the start frame 112, the transition frames 130, and the end frame 122.

For example, the start frame 112 may be a picture of a cat facing to the right, and the caption 114 may be "a cat is sitting and facing to the right." Furthermore, the end frame 122 may be a picture of a dog facing forward, and the caption 124 may be "a dog is sitting and facing forward." In the transition frame 130-1, the head of the cat may be turned slightly to left, and the appearance of the cat may begin to morph into an appearance of the dog. In the transition frame 130-N, the head of the cat may be almost turned to face forward, and the appearance of the dog may have almost morphed into the appearance of the dog.

In some related schemes, image-to-video diffusion models apply a binary mask and broadcast the mask to a size of a latent code. The conditional input is given by concatenating original latent code, binary mask, and masked latent code along the channel dimension. The conditional image is concatenated with per-frame initial noise to preserve visual details. However, the latent code is initialized randomly for de-noising during the inference stage. This naive initialization strategy leads to random and abrupt content flickering for object-level transition, harming the fidelity of generated frames.

In the environment 100, the computing device 102 may generate a latent noise 116 in a latent space based on the start frame 112, and generate a latent noise 126 in the latent space based on the end frame 122. The latent space refers to a lower-dimensional representation of data in machine learning models, particularly in the context of generative models such as auto-encoders, generative adversarial networks (GANs), and variational auto-encoders (VAEs). In the latent space, complex data, such as images or text, may be encoded into a more abstract, compressed form, capturing the essential features while discarding less important details. The latent noises are noises reside in the latent space. In some implementations, the latent noise 116 for the start frame 112 and the latent noise 126 for the end frame may be generated by reversing de-noising processes for generating the start frame 112 and the end frame 122. Because the latent noises 116 and 126 are generated from the start frame 112 and the end frame 122, the latent noises 116 and 126 may include the information of the start frame 112 and the end frame 122.

In the environment 100, the computing device 102 may generate latent noises 128-1, 128-2, ..., and 128-N (also collectively referred to as latent noises 128) based on the latent noise 116 for the start frame 112 and the latent noise 126 for the end frame 122. In the process of generating the latent noises 128, the contribution of the start frame 112 to the latent noises 128 and the contribution of the end frame 122 to the latent noises 128 may be different. For example, in the process of generating the latent noise 128-1, the contribution of the latent noise 116 may be greater than the contribution of the latent noise 126. Furthermore, in the process of generating the latent noise 128-N, the contribution of the latent noise 126 may be greater than the contribution of the latent noise 116.

In the environment 100, a de-noising module 106 of the diffusion model 104 may receive the latent noises 128, and generate the transition frames 130 based on the latent noises 128, the start frame 112, the caption 114, the end frame 122, and the caption 124. The de-noising module 106 in the diffusion model 104 is a component responsible for progressively removing noise from the latent noises 128 during a reverse process of the diffusion model 104. The de-noising module 106 may be implemented as a neural network that has been trained to predict and subtract a noise added during a forward diffusion process, thereby recovering or generating a clean, high-quality image from a noisy input. Examples of the de-noising module 106 may include, but are not limited to U-Net models, residual networks, transformer-based models, de-noising auto-encoders, etc. In the implementations of the present disclosure, a de-noising U-Net model may be used as an example of the de-noising module.

In this way, the latent noises 128 for generating the transition frames 130 can include information from both the start frame 112 and the end frame 122, improving the smoothness of the transitions and reducing randomness and discontinuity. Additionally, by using the pre-trained image-to-video diffusion model 104, no training or fine-tuning is needed, preserving the appearance and motion knowledge from the pre-trained model.

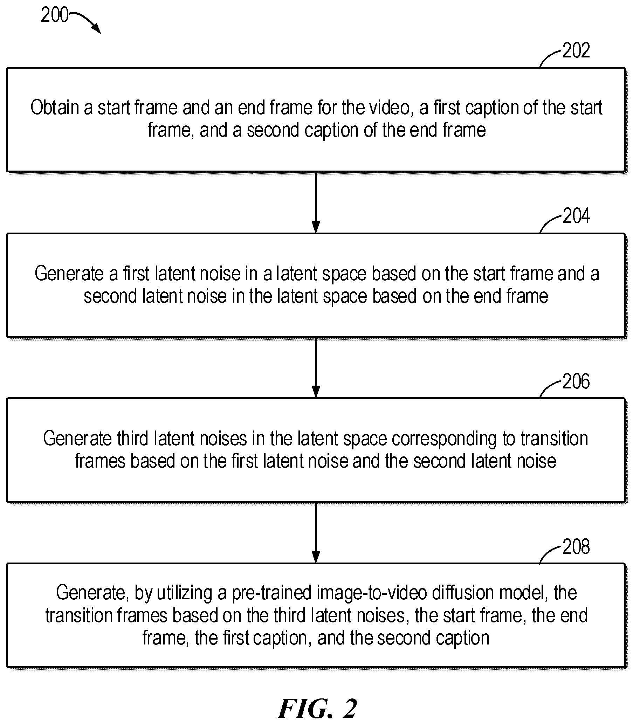

FIG. 2 is a flow chart illustrating an example process 200 of generating a video according to some implementations of the present disclosure. The process 200 may be implemented by a computing device (e.g., the computing device 102 in FIG. 1). As shown in FIG. 2, at block 202, the computing device may obtain a start frame and an end frame for the video, a first caption of the start frame, and a second caption of the end frame. For example, in the environment 100 of FIG. 1, the computing device may obtain the start frame 112, the caption 114 for the start frame 112, the end frame 122, and the caption 124 for the end frame 122. For example, the start frame 112 may be a picture of a cat facing to the right, and the caption 114 may be "a cat is sitting and facing to the right." Furthermore, the end frame 122 may be a picture of a dog facing forward, and the caption 124 may be "a dog is sitting and facing forward."

At block 204, the computing device may generate a first latent noise in a latent space based on the start frame and a second latent noise in the latent space based on the end frame. For example, in the environment 100 of FIG. 1, the computing device 102 may generate the latent noise 116 based on the start frame 112. Furthermore, the computing device 102 may generate the latent noise 126 based on the end frame 122. Because the latent noises 116 and 126 are generated from the start frame 112 and the end frame 122, the latent noises 116 and 126 may include the information of the start frame 112 and the end frame 122.

At block 206, the computing device may generate third latent noises in the latent space corresponding to transition frames based on the first latent noise and the second latent noise. For example, in the environment 100 of FIG. 1, the computing device 102 may generate the latent noises 128 based on the latent noise 116 for the start frame 112 and the latent noise 126 for the end frame 122. The latent noises 128 may be used to generate the transition frames 130. For example, the latent noise 128-1 may be used to generate the transition frame 130-1, and the latent noise 128-2 may be used to generate the transition frame 130-2, etc. Because the latent noises 116 and 126 include the information of the start frame 112 and the end frame 122, the generated latent noises 128 may also include the information of the start frame 112 and the end frame 122.

At bock 208, the computing device may generate, by utilizing a pre-trained image-to-video diffusion model, the transition frames based on the third latent noises, the start frame, the end frame, the first caption, and the second caption. For example, in the environment 100, the de-noising module 106 may generate the transition frames 130 based on the latent noises 128, the start frame 112, the caption 114, the end frame 122, and the caption 124. The start frame 112, the transition frames 130, and the end frame 122 may be video frames of the video 132.

In this way, the latent noises for generating the transition frames can include information of the start frame and information of the end frame. Thus, the smoothness of the generated transition frames can be improved, and the randomness and discontinuity of the generated transition frames can be reduced. Furthermore, by utilizing a pre-trained image-to-video diffusion model, this scheme does not need a training process or a fun-tuning process, thereby the appearance and motion prior of the pre-trained model can be preserved.

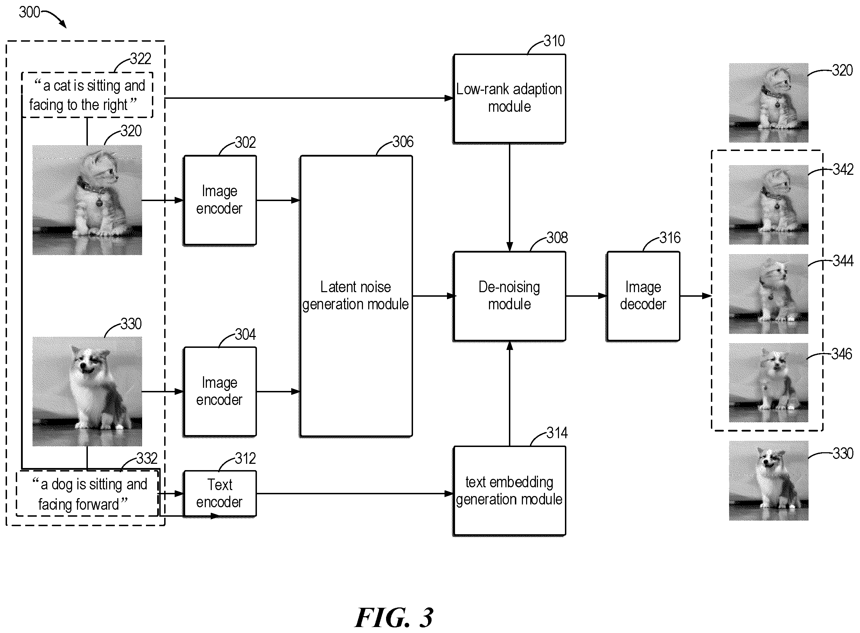

FIG. 3 is a schematic diagram illustrating an example framework 300 for generating a video according to some implementations of the present disclosure. As shown in FIG. 3, the framework 300 includes an image encoder 302, an image encoder 304, a latent noise generation module 306, a de-noising module 308, a low-rank adaption module 310, a text encoder 312, a text embedding generation module 314, and an image decoder 316. As shown in FIG. 3, a start frame 320 may be provided with a caption 322 (e.g., "a cat is sitting and facing to the right"). Furthermore, an end frame 330 may be provided with a caption 332 (e.g., "a dog is sitting and facing forward").

In the framework 300, the image coder 302 may encode the start frame 320 into an image embedding, and the image encoder 304 may encode the end frame 330 into an image embedding. The image encoder 302 and the image encoder 304 may be a neural network for compressing the rich and high-dimensional information of the input image into a set of features that capture the essential characteristics of the input image. For example, the image encoders 302 and 304 may be convolutional neural networks (CNNs), residual networks, vision transformers, or auto-encoders, etc.

The latent noise generation module 306 may generate a latent noise (e.g. the latent noise 116 in FIG. 1) corresponding to the start frame 320 based on the image embedding of the start frame 320, and generate a latent noise (e.g., the latent noise 126 in FIG. 1) corresponding to the end frame 330 based on the image embedding of the end frame 330. In addition, the latent noise generation module 306 may generate latent noises (e.g., the latent noises 128 in FIG. 1) corresponding to transition frames to be generated based on the latent noise corresponding to the start frame and the latent noise corresponding to the end frame.

As shown in FIG. 3, the start frame 320, the caption 322, the end frame 330, and the caption 332 may be input into the low-rank adaption module 310. Low-rank adaption is a technique used in machine learning to efficiently fine-tune large pre-trained models with fewer parameters and computational resources. The low-rank adaption may introduce a low-rank approximation to the changes in the weights of the model during fine-tuning, allowing for a more efficient adaptation to new tasks or datasets without the need to update all the parameters of the model. The low-rank adaption module 310 may be trained to determine low-rank adaption parameters for the transition frames to be generated respectively. The low-rank adaption parameters may be integrated into the de-noising module 308 respectively. In this way, the semantic similarity between the generated transition frames and the input frames can be improved.

The text encoder 312 may encode texts into vector representations known as text embeddings. The text embeddings capture the essential semantic and syntactic information of the input text. As shown in FIG. 3, the text encoder 312 may encode the caption 322 for the start frame 320 into a text embedding, and encode the caption 332 for the end frame 330 into a text embedding. The text embeddings may include the information of the start frame 320 and the end frame 330. Then, the text embedding generation module 314 may generate text embeddings for the transition frames to be generated based on the text embedding corresponding to the caption 322 and the text embedding corresponding to the end frame 330. The generated text embeddings may be integrated into the de-noising module 308. In this way, the alignment of the generated transition frames with the input captions can be improved.

As shown in FIG. 3, the de-noising module 308 (e.g., a de-noising U-Net model) integrated with the low-rank adaption parameters and the text embeddings may generate image embeddings for the transition frames based on the latent noises generated by the latent noise generation module 306. Then, these image embeddings may be input into the image decoder 316. The image decoder 316 may convert a low-dimensional image embedding back into a high-dimensional image. As shown in FIG. 3, the image decoder 316 may decode these image embeddings into transition frames 342, 344, and 346. Therefore, the start frame 320, the transition frames 342, 344 and 346, and the end frame 330 may be used to generate the transition video.

In this way, the semantic similarity between the generated transition frames and the input frames, the fidelity of the generated transition frames, the smoothness across the generated transition frames, and the alignment of the generated transition frames with the provided captions can be improved.

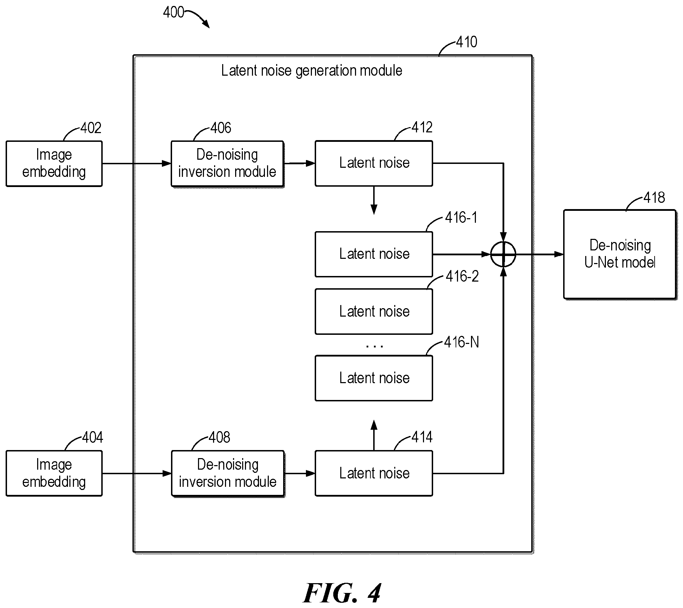

FIG. 4 is a schematic diagram illustrating an example 400 of generating latent noises for the transition frames and feeding the latent noises into a de-noising U-Net model according to some implementations of the present disclosure. As shown in FIG. 4, the example 400 includes a latent noise generation module 410 (e.g., the latent noise generation module 306 in FIG. 3) and a de-noising U-Net module 418 (e.g., the de-noising module 308 in FIG. 3). The de-noising U-Net model 418 is a neural network designed for image de-noising tasks, and the de-noising U-Net model 418 is based on a U-net architecture. The U-Net model is a type of convolutional neural network (CNN) architecture that is widely used in image processing tasks. The U-Net architecture is known for its ability to produce high-quality results with a relatively small amount of training data, and it is particularly effective when the task requires precise localization and spatial information.

In the example 400, an image embedding 402 is generated by an image encoder (e.g., the image encoder 302 in FIG. 3) based on a start frame. Furthermore, an image embedding 404 is generated by an image coder (e.g., the image encoder 304 in FIG. 3) based on an end frame. In the example 400, the latent noise generation module 410 may include a de-noising inversion module 406 and a de-noising inversion module 408. The de-noising inversion modules 406 and 408 may reverse de-noising processes for generating the image embeddings 402 and 404 to obtain a latent noise 412 corresponding to the image embedding 402 and a latent noise 414 corresponding to the image embedding 404.

In some implementations, the de-noising inversion modules 406 and 408 may be de-noising diffusion implicit model (DDIM) inversion modules. DDIM sampling is a process of generating images from a trained DDIM by reversing the diffusion process. In a diffusion model, the images may be generated by starting with random noise and progressively refining it into a coherent output image through a series of de-noising steps. DDIM inversion is the reverse process of DDIM sampling, where the goal is to take an existing image and reverse the generation process back into its corresponding latent noise. The DDIM inversion allows obtaining a latent noise $z_{t+1}$ from a latent noise $z_t$ by using the following Equation (1):

$$z_{t+1} = \sqrt{\frac{\alpha_{t+1}}{\alpha_t}} z_t + \left( \sqrt{\frac{1}{\alpha_{t+1}} - 1} - \sqrt{\frac{1}{\alpha_t} - 1} \right) \cdot \epsilon_\theta \left( z_t, \tilde{z}_t, c, t \right)$$

(1)

where $\alpha_t$ comes from the variance schedule of forward diffusion process and $\varepsilon_\theta$ ($z_t$, $\tilde{z}_t$, c, t) represents the de-noising U-Net conditioned on the image condition $\tilde{z}_t$ and the text condition c.

As shown in FIG. 4, after generating the latent noise 412 corresponding to the start frame and the latent noise 414 corresponding to the end frame, the latent noise generation module 410 may generate latent noises 416-1, 416-2, ..., and 416-N (also collectively referred to as latent noises 416) for the transition frames to be generated based on the latent noises 412 and 414. Then, the generated latent noises 416 may be concatenated with the latent noises 412 and 414 respectively. For example, as shown in FIG. 4, the latent noise 416-1 for one of the transition frames to be generated may be concatenated with the latent noises 412 and 414. Then, the concatenated latent noise can be fed into the de-noising U-Net model 418 to generate transition frames.

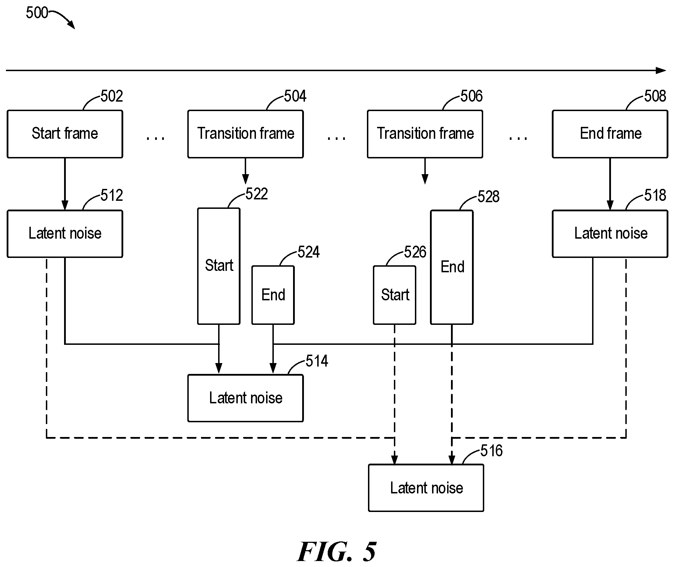

In some implementations, the latent noises for the transition frames may be generated by performing interpolations on the latent noise corresponding to the start frame and the latent noise corresponding to the end frame. FIG. 5 is a schematic diagram illustrating an example process 500 of generating latent noises for the transition frames according to some implementations of the present disclosure. As shown in FIG. 5, in the process 500, a computing device may generate latent noises for the transition frames based on a start frame 502 and an end frame 508. For example, the transition frames may include a transition frame 504 and a transition frame 506, where the transition frame 504 is closer to the start frame 502 than the transition frame 506.

In the process 500, the computing device may generate a latent noise 512 based on the start frame 502, and generate a latent noise 518 based on the end frame 508. The computing device may generate a latent noise 514 for the transition frame 504 and a latent noise 516 for the transition frame 506. The computing device may perform interpolations on the latent noise 512 and the latent noise 518 to generate the latent noise 514 and the latent noise 516. In the interpolation processes, the contributions of the latent noise 512 and 518 may be different. For example, in the process of generating the latent noise 514, the computing device may determine a weight 522 for the latent noise 512 and a weight 524 for the latent noise 518. Furthermore, in the process of generating the latent noise 516, the computing device may determine a weight 526 for the latent noise 512 and a weight 528 for the latent noise 518. Because the transition frame 504 is closer to the start frame 502 than the transition frame 506, the weight 522 may be greater than the weight 526.

In this way, the appearance of the object in the transition frame 504 may be more similar to the appearance of the object in the start frame 502 than the appearance of the object in the transition frame 506. Thus the smoothness of the generated transition frames can be improved, and the randomness and discontinuity of the generated transition frames can be reduced.

In some implementations, the latent noises for the transition frames may be generated by performing spherical interpolations on the latent noise corresponding to the start frame and the latent noise corresponding to the end frame. Spherical interpolation is a method of interpolating between two points on a sphere. Unlike the linear interpolation, which operates in a straight line between two points in Euclidean space, the spherical interpolation operates along the shortest path on the surface of a sphere. This ensures that the interpolation respects the spherical geometry of the data. By interpolating on a sphere, the transition between latent noises can be smoother and can produce more realistic intermediate outputs. The spherical interpolation can be formulated as Equation (2):

$$z_{tn} = \frac{\sin((1 - \lambda_{inject})\phi)}{\sin \phi} z_{t1} + \frac{\sin(\lambda_{inject}\phi)}{\sin \phi} z_{tN}$$

(2)

where $z_{t1}$ denotes the latent noise corresponding to the start frame, $z_{tN}$ denotes the latent noise corresponding to the end frame, $z_{tn}$ denotes the latent noise corresponding to the n-th frame, $\phi = \arccos\left( \frac{z_{t1}^T z_{tN}}{\|z_{t1}\| \|z_{tN}\|} \right)$, and $\lambda_{inject} \in [0, 1]$ denotes the parameter for the latent interpolation.

In this way, the spherical interpolations can preserve the Euclidean norm of the interpolated latent noises, thereby improving the quality, consistency, and realism of the generated transition frames.

In some implementations, the computing device may generate a first low-rank adaption parameter based on the start frame and the caption for the start frame, and generate a second low-rank adaption parameter based on the end frame and the caption for the end frame. Then, the computing device may generate third low-rank adaption parameters based on the first low-rank adaption parameter and the second low-rank adaption parameter. The computing device may generate the transition frames based on the third latent noises and the third low-rank adaption parameters. In some implementations, the computing device may generate the third low-rank adaption parameters by performing linear interpolations on the first low-rank adaption parameter and the second low-rank adaption parameter. In some implementations, the computing device may generate target de-noising modules by integrating the third low-rank adaption parameters into the original de-noising module. The computing device may generate, by utilizing the target de-noising modules, the transition frames based on the third latent noises.

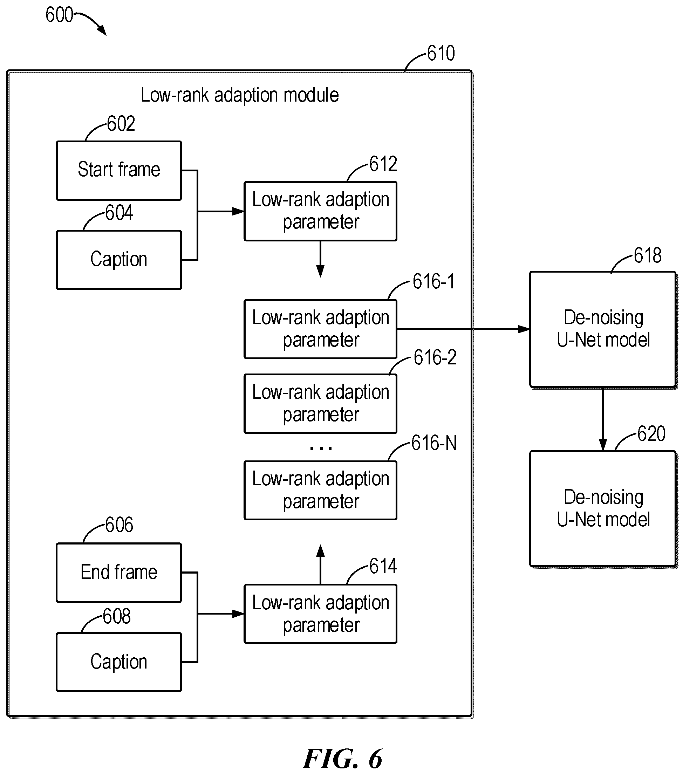

FIG. 6 is a schematic diagram illustrating an example 600 of integrating low-rank adaption parameters for the transition frames into a de-noising U-Net model according to some implementations of the present disclosure. As shown in FIG. 6, the example 600 includes a low-rank adaption module 610 (e.g., the low-rank adaption module 310 in FIG. 3). The low-rank adaption module 610 may be configured to encapsulate high-level semantics into a low-rank parameter space. In the example 600, a start frame 602, a caption 604 for the start frame 602, an end frame 606, and a caption 608 for the end frame 606 may be provided. The low-rank adaption module 610 may be trained based on the start frame 602 and the caption 604 to determine a low-rank adaption parameter 612. In addition, the low-rank adaption module 610 may be trained based on the end frame 606 and the caption 608 to obtain a low-rank adaption parameter 614. The objective function of the training process may be Equation (3):

$$\mathcal{L}\left(\triangle\theta_n\right) = \mathbb{E}_{\epsilon,t}\left[\left\|\epsilon - \epsilon_{\theta+\triangle\theta_i}\left(\sqrt{\bar{\alpha}_t}z_{0n} + \sqrt{1-\bar{\alpha}_t}\epsilon, t, c_n\right)\right\|^2\right] \tag{3}$$

where $\triangle\theta_n$ denotes the low-rank adaption parameter for the frame $n$, $z_{0n}$ denotes the encoded latent vector of the frame $n$, and $c_n$ denotes the text embedding associated with the transition caption.

In the example 600, low-rank adaption parameters 616-1, 616-2, ..., and 616-N (also collectively referred to as low-rank adaption parameters 616) for the transition frames may be generated based on the low-rank adaption parameter 612 and the low-rank adaption parameter 614. In some implementations, the low-rank adaption parameters 616 may be generated by performing linear interpolations on the low-rank adaption parameter 612 and the low-rank adaption parameter 614. If a transition frame to be generated is closer to the start frame 602 than a further transition frame, the contribution of the low-rank adaption parameter 612 to this transition frame may be greater than the contribution of the low-rank adaption parameter 612 to the further transition frame. The linear interpolation may be formulated as Equation (4):

$$\Delta\theta = (1 - \lambda_{adapt})\Delta\theta_1 + \lambda_{adapt}\Delta\theta_N \tag{4}$$

where $\triangle\theta$ denotes the low-rank adaption parameter for the transition frame, $\triangle\theta_1$ denotes the low-rank adaption parameter for the start frame, $\triangle\theta_N$ denotes the low-rank adaption parameter for the end frame, and $\lambda_{adapt}$ denotes the interpolation parameter during the frame adaption. The interpolation parameter decreases as the transition frame gets closer to the start frame.

As shown in FIG. 6, the low-rank adaption parameters 616 may be integrated into a de-noising U-Net model 618 respectively. For example, the low-rank adaption parameter 616-1 may be integrated into the de-noising U-Net model 618 to obtain a de-noising U-Net model 620. The de-noising U-Net model 620 may be used to generate a transition frame corresponding to the low-rank adaption parameter 616-1.

In this way, by utilizing the de-noising U-Net model integrated with the low-rank adaption parameter as the noise prediction network, the generated transition frames can become semantically meaningful while maintaining temporal coherence.

In some implementations, the computing device may generate a first text embedding based on the caption of the start frame, and generating a second text embedding based on the caption of the end frame. The computing device may generate third text embeddings based on the first text embedding and the second text embedding. Then, the computing device may generate the transition frames based on the third text embeddings and the third latent noises. In some implementations, the computing device may generate the third text embeddings by performing linear interpolations on the first text embedding and the second text embedding.

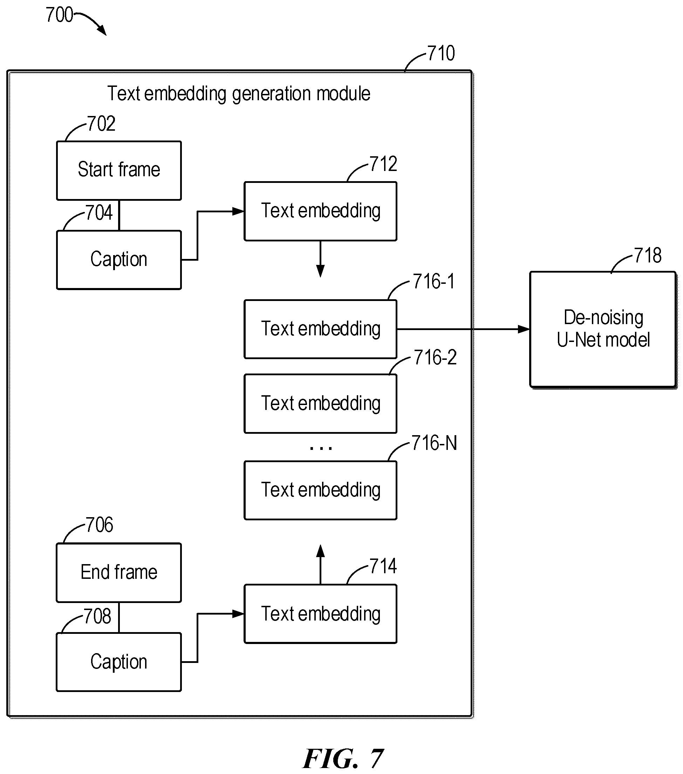

FIG. 7 is a schematic diagram illustrating an example 700 of integrating text embeddings for the transition frames into the de-noising U-Net model according to some implementations of the present disclosure. As shown in FIG. 7, the example 700 includes a text embedding generation module 710 (e.g., the text embedding generation module 314 in FIG. 3). A start frame 702, a caption 704 for the start frame 702, an end frame 706, and a caption 708 for the end frame 706 may be provided. A text embedding 712 may be generated by a text encoder (e.g., the text encoder 312) based on the caption 704, and a text embedding 714 may be generated by the text encoder based on the caption 708.

In the example 700, text embeddings 716-1, 716-2, ..., and 716-N (also collectively referred to as text embeddings 716) for the transition frames may be generated based on the text embedding 712 and the text embedding 714. In some implementations, the text embeddings 716 may be generated by performing leaner interpolations on the text embedding 712 and the text embedding 714. If a transition frame to be generated is closer to the start frame 702 than a further transition frame, the contribution of the text embedding 712 to this transition frame may be greater than the contribution of the text embedding 712 to the further transition frame. The linear interpolation may be formulated as Equation (5):

$$c_{\lambda text} = (1 - \lambda_{text})c_1 + \lambda_{text}c_N \qquad (5)$$

where $c_{\lambda text}$ denotes the text embedding for the transition frame, $c_1$ denotes the text embedding for the start frame, $c_N$ denotes the text embedding for the end frame, and $\lambda_{text} \in [0, 1]$ serves as the frame-aware coefficient to control the transition sequence. The frame-aware coefficient decreases as the transition frame gets closer to the start frame.

As shown in FIG. 7, the text embeddings 716 may be integrated into a cross attention layer within a de-noising U-Net model 718. For example, when generating a transition frame corresponding to the text embedding 716-1, the text embedding 716-1 may be integrated into the cross attention layer within the de-noising U-Net model 718.

In this way, by utilizing the interpolated text embeddings for DDIM sampling, meaningful transition frames can be generated. For example, an interpolation between a "lion" and a "truck" might show a gradual transition, resulting in a truck with a shape and a skin of the lion in the transition frame.

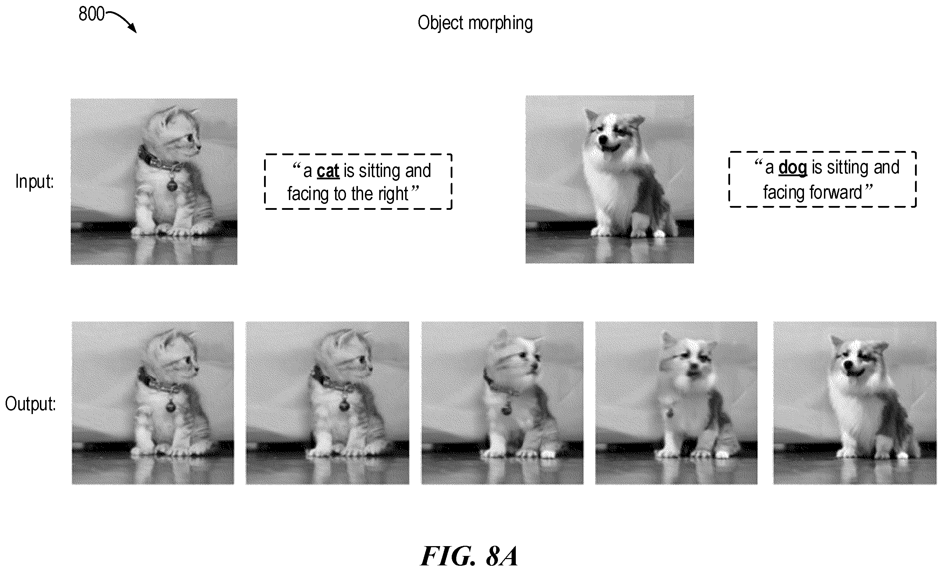

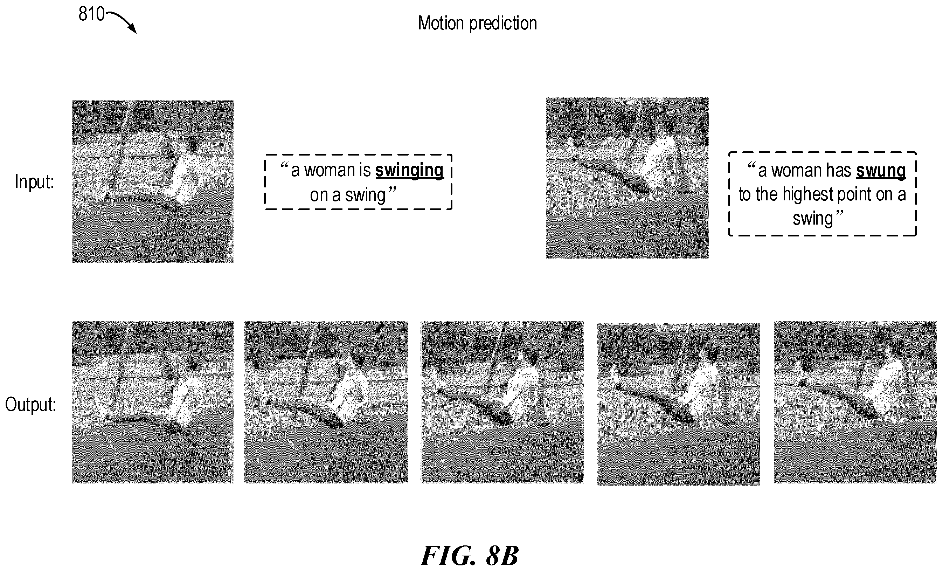

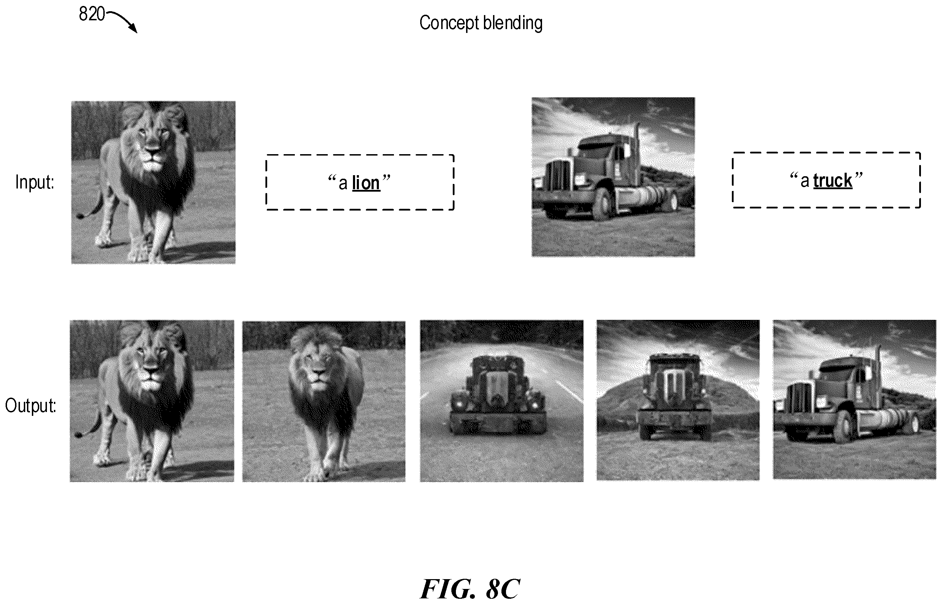

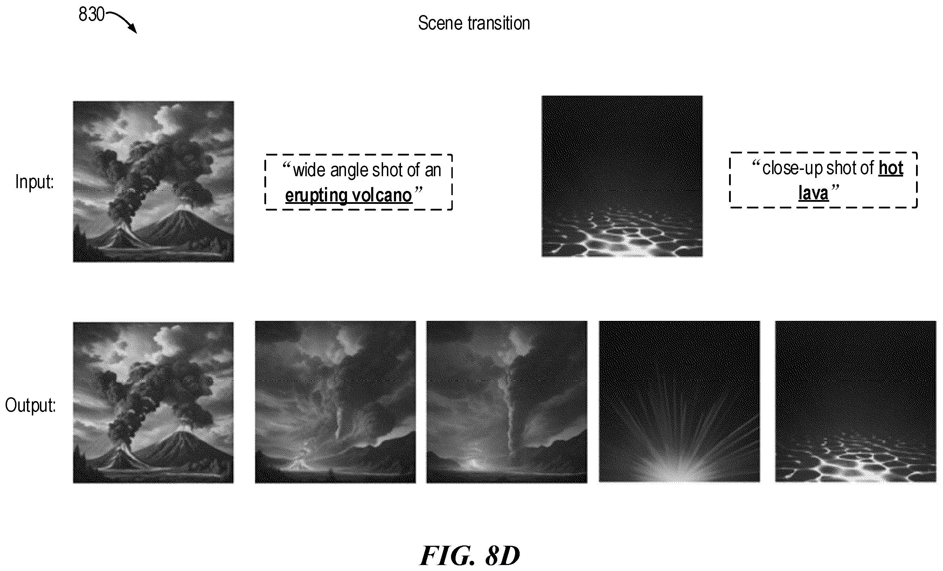

By utilizing the latent noise interpolation, the low-rank adaption, and the text embedding interpolation, the framework provided in the present disclosure can work for multiple transition generation tasks including object morphing, concept blending, motion prediction, and scene transition. In addition, the framework is a zero-shot, unified, and plug-and-play solution that effectively generates semantically relevant, high-fidelity, and temporally coherent video transitions. Object morphing refers to input frames that can either depict the same object in different postures or different objects, as long as they are topologically similar. Concept blending refers to input frames that contain conceptually different objects (e.g., "an airplane" and "a cruise ship"). Motion prediction refers to input frames that represent two moments in a video featuring one or more moving objects. Scene transition refers to input frames that are conceptually related scenes, but either belong to different domains (e.g., "a wooden house in the forest" and "a wooden house in the snow") or represent distinct components of a scene (e.g., "erupting volcano" and "hot lava"). FIGS. 8A-8D are schematic diagrams illustrating examples of multiple transition tasks according to some implementations of the present disclosure. Specifically, FIG. 8A shows an example 800 of the object morphing task. FIG. 8B shows an example 810 of the motion prediction task. FIG. 8C shows an example 820 of the concept blending task. FIG. 8D shows an example 830 of the scene transition task.

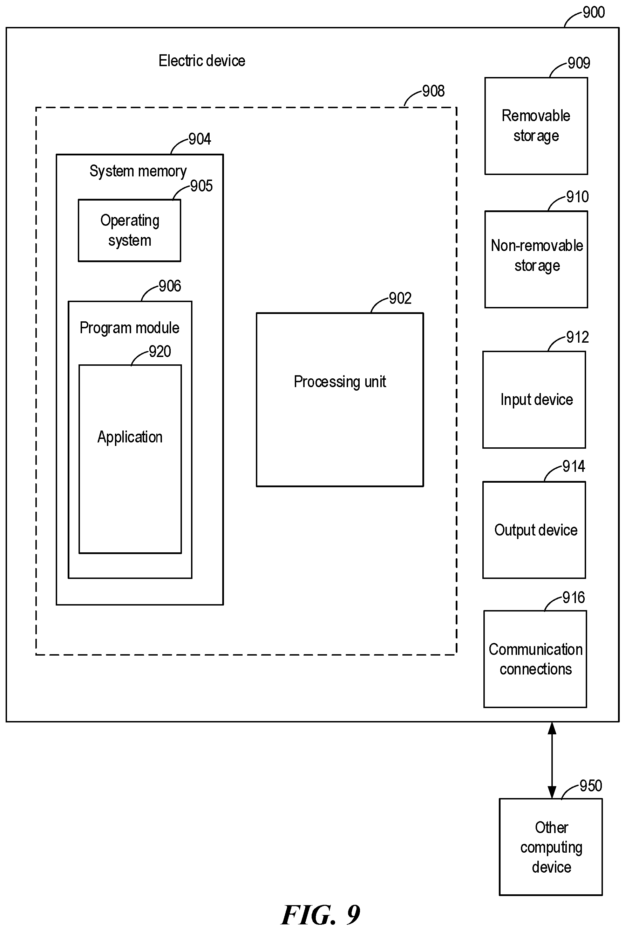

FIG. 9 is a block diagram illustrating physical components (e.g., hardware) of an electronic device 900 with which aspects of the disclosure may be practiced. For example, the electronic device 900 may be the computing device 102 in FIG. 1, and the electronic device 900 may implements the processes as depicted in FIGS. 1-7 and FIGS. 8A-8D. In a basic configuration, the electric device 900 may include at least one processing unit 902 and a system memory 904. Depending on the configuration and type of computing device, the system memory 904 may comprise, but is not limited to, volatile storage (e.g., random access memory), non-volatile storage (e.g., read-only memory), flash memory, or any combination of such memories.

The system memory 904 may include an operating system 905 and one or more program modules 906 suitable for performing the various aspects disclosed herein such. The operating system 905, for example, may be suitable for controlling the operation of the electric device 900. Furthermore, aspects of the disclosure may be practiced in conjunction with other operating systems, or any other application program and is not limited to any particular application or system. This basic configuration is illustrated in FIG. 9 by those components within a dashed line 908. The electric device 900 may have additional features or functionality. For example, the electric device 900 may also include additional data storage devices (removable and/or non-removable) such as, for example, magnetic disks, optical disks, or tape. Such additional storage is illustrated in FIG. 9 by a removable storage device 909 and a non-removable storage device 910.

As stated above, several program modules and data files may be stored in the system memory 904. While executing on the at least one processing unit 902, an application 920 or program modules 906 may perform processes including, but not limited to, one or more aspects, as described herein. The application 920 may include an application interface 921 which may be the same as or similar to the application interface 921 as previously described in more detail with regard to FIGS. 1-7 and FIGS. 8A-8D. Other program modules that may be used in accordance with aspects of the present disclosure may include electronic mail and contacts applications, word processing applications, spreadsheet applications, database applications, slide presentation applications, drawing or computer-aided application programs, etc., and/or one or more components supported by the systems described herein.

Furthermore, aspects of the disclosure may be practiced in an electrical circuit comprising discrete electronic elements, packaged or integrated electronic chips containing logic gates, a circuit utilizing a microprocessor, or on a single chip containing electronic elements or microprocessors. For example, aspects of the disclosure may be practiced via a system-on-a-chip (SOC) where each or many of the components illustrated in FIG. 9 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the processing device 500 on the single integrated circuit (chip). Aspects of the disclosure may also be practiced using other technologies capable of performing logical operations such as, for example, AND, OR, and NOT, including but not limited to mechanical, optical, fluidic, and quantum technologies. In addition, aspects of the disclosure may be practiced within a general-purpose computer or in any other circuits or systems.

The electric device 900 may also have one or more input device(s) 912 such as a keyboard, a mouse, a pen, a sound or voice input device, a touch or swipe input device, etc. The output device(s) 914 such as a display, speakers, a printer, etc. may also be included. The aforementioned devices are examples and others may be used. The processing device 500 may include one or more communication connections allowing communications with other computing or processing devices 950. Examples of suitable communication connections include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 904, the removable storage device 909, and the non-removable storage device 910 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the electric device 900. Any such computer storage media may be part of the electric device 900. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

In addition, the aspects and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example, user interfaces and information of various types may be displayed and interacted with. Interaction with the multitude of computing systems with which embodiments of the invention may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Any of the steps, functions, and operations discussed herein can be performed continuously and automatically.

The exemplary systems and methods of this disclosure have been described in relation to computing devices. However, to avoid unnecessarily obscuring the present disclosure, the preceding description omits several known structures and devices. This omission is not to be construed as a limitation. Specific details are set forth to provide an understanding of the present disclosure. It should, however, be appreciated that the present disclosure may be practiced in a variety of ways beyond the specific detail set forth herein.

Furthermore, while the exemplary aspects illustrated herein show the various components of the system collocated, certain components of the system can be located remotely, at distant portions of a distributed network, such as a LAN and/or the Internet, or within a dedicated system. Thus, it should be appreciated, that the components of the system can be combined into one or more devices, such as a server, communication device, or collocated on a particular node of a distributed network, such as an analog and/or digital telecommunications network, a packet-switched network, or a circuit-switched network. It will be appreciated from the preceding description, and for reasons of computational efficiency, that the components of the system can be arranged at any location within a distributed network of components without affecting the operation of the system.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radiowave and infra-red data communications.

While the flowcharts have been discussed and illustrated in relation to a particular sequence of events, it should be appreciated that changes, additions, and omissions to this sequence can occur without materially affecting the operation of the disclosed configurations and aspects.

Several variations and modifications of the disclosure can be used. It would be possible to provide for some features of the disclosure without providing others.

In yet another configurations, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another configuration, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another configuration, the disclosed methods may be partially implemented in software that can be stored on a non-transitory storage medium, executed on programmed general-purpose computer with the cooperation of a controller and memory, a special purpose computer, a microprocessor, or the like. In these instances, the systems and methods of this disclosure can be implemented as a program embedded on a personal computer such as an applet, JAVA® or CGI script, as a resource residing on a server or computer workstation, as a routine embedded in a dedicated measurement system, system component, or the like. The system can also be implemented by physically incorporating the system and/or method into a software and/or hardware system.

The disclosure is not limited to standards and protocols if described. Other similar standards and protocols not mentioned herein are in existence and are included in the present disclosure. Moreover, the standards and protocols mentioned herein, and other similar standards and protocols not mentioned herein are periodically superseded by faster or more effective equivalents having essentially the same functions. Such replacement standards and protocols having the same functions are considered equivalents included in the present disclosure.

The present disclosure, in various configurations and aspects, includes components, methods, processes, systems and/or apparatus substantially as depicted and described herein, including various combinations, sub-combinations, and subsets thereof. Those of skill in the art will understand how to make and use the systems and methods disclosed herein after understanding the present disclosure. The present disclosure, in various configurations and aspects, includes providing devices and processes in the absence of items not depicted and/or described herein or in various configurations or aspects hereof, including in the absence of such items as may have been used in previous devices or processes, e.g., for improving performance, achieving ease, and/or reducing cost of implementation.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects that do not depart from the broader scope of the claimed disclosure.

**Claims**

1. A method (200) for generating a video, comprising:

    obtaining (202) a start frame and an end frame for the video, a first caption of the start frame, and a second caption of the end frame;
    generating (204) a first latent noise in a latent space based on the start frame and a second latent noise in the latent space based on the end frame;
    generating (206) third latent noises in the latent space corresponding to transition frames based on the first latent noise and the second latent noise; and
    generating (208), by utilizing a pre-trained image-to-video diffusion model, the transition frames based on the third latent noises, the start frame, the end frame, the first caption, and the second caption.

2. The method (200) of claim 1, wherein generating the first latent noise in a latent space based on the start frame and the second latent noise in the latent space based on the end frame comprises:

    generating a first image embedding based on the start frame;
    generating a second image embedding based on the end frame;
    generating the first latent noise by reversing a de-noising process for generating the first image embedding; and
    generating the second latent noise by reversing a de-noising process for generating the second image embedding

3. The method (200) of claim 1, wherein generating the third latent noises in the latent space corresponding to the transition frames based on the first latent noise and the second latent noise comprises:
generating the third latent noises by performing interpolations on the first latent noise and the second latent noise.

4. The method (200) of claim 3, wherein generating the third latent noises by performing the interpolations on the first latent noise and the second latent noise comprises:
generating the third latent noises by performing spherical linear interpolations on the first latent noise and the second latent noise.

5. The method (200) of claim 1, wherein generating, by utilizing the pre-trained image-to-video diffusion model, the transition frames based on the third latent noises, the start frame, the end frame, the first caption, and the second caption comprises:

    generating a first low-rank adaption parameter based on the start frame and the first caption;
    generating a second low-rank adaption parameter based on the end frame and the second caption;
    generating third low-rank adaption parameters based on the first low-rank adaption parameter and the second low-rank adaption parameter; and
    generating the transition frames based on the third latent noises and the third low-rank adaption parameters.

6. The method (200) of claim 5, wherein generating the third low-rank adaption parameters based on the first low-rank adaption parameter and the second low-rank adaption parameter comprises:
generating the third low-rank adaption parameters by performing linear interpolations on the first low-rank adaption parameter and the second low-rank adaption parameter.

7. The method (200) of claim 5, wherein the pre-trained image-to-video diffusion model comprises an original de-noising module, and generating the transition frames based on the third latent noises and the third low-rank adaption parameters comprises:

generating target de-noising modules by integrating the third low-rank adaption parameters into the original de-noising module; and

generating, by utilizing the target de-noising modules, the transition frames based on the third latent noises.

8. The method (200) of claim 1, wherein generating, by utilizing a pre-trained image-to-video diffusion model, the transition frames based on the third latent noises, the start frame, the end frame, the first caption, and the second caption comprises:

generating a first text embedding based on the first caption of the start frame;
generating a second text embedding based on the second caption of the end frame;
generating third text embeddings based on the first text embedding and the second text embedding; and
generating the transition frames based on the third text embeddings and the third latent noises.

9. The method (200) of claim 8, wherein generating the third text embeddings based on the first text embedding and the second text embedding comprises:
generating the third text embeddings by performing linear interpolations on the first text embedding and the second text embedding.

10. The method (200) of claim 1, wherein the start frame, the first caption, the end frame, and the second caption are applied for any of the following transition tasks: object morphing, concept blending, motion prediction, and scene transition.

11. An electronic device (900), comprising:

a memory (904) and a processor (902);
wherein the memory (904) is configured to store one or more computer instructions which, when executed by the processor (902), cause the processor (902) to:

obtain a start frame and an end frame for the video, a first caption of the start frame, and a second caption of the end frame;
generate a first latent noise in a latent space based on the start frame and a second latent noise in the latent space based on the end frame;
generate third latent noises in the latent space corresponding to transition frames based on the first latent noise and the second latent noise; and
generate, by utilizing a pre-trained image-to-video diffusion model, the transition frames based on the third latent noises, the start frame, the end frame, the first caption, and the second caption.

12. The device (900) of claim 11, wherein the instructions causing the processor to generate the first latent noise in a latent space based on the start frame and the second latent noise in the latent space based on the end frame comprise instructions causing the processor to:

generate a first image embedding based on the start frame;
generate a second image embedding based on the end frame;
generate the first latent noise by reversing a de-noising process for generating the first image embedding; and
generate the second latent noise by reversing a de-noising process for generating the second image embedding

13. The device (900) of claim 11, wherein the instructions causing the processor to generate the third latent noises in the latent space corresponding to the transition frames based on the first latent noise and the second latent noise comprise instructions causing the processor to:
generate the third latent noises by performing interpolations on the first latent noise and the second latent noise.

14. The device (900) of claim 13, wherein the instructions causing the processor to generate the third latent noises by performing the interpolations on the first latent noise and the second latent noise comprise instructions causing the processor to:
generate the third latent noises by performing spherical linear interpolations on the first latent noise and the second latent noise.

**15.** A non-transitory computer-readable medium comprising instructions stored thereon which, when executed by a processor, cause the processor to perform the method (200) according to any of claims 1-10.

**FIG. 1**

200

202

Obtain a start frame and an end frame for the video, a first caption of the start frame, and a second caption of the end frame

204

Generate a first latent noise in a latent space based on the start frame and a second latent noise in the latent space based on the end frame

206

Generate third latent noises in the latent space corresponding to transition frames based on the first latent noise and the second latent noise

208

Generate, by utilizing a pre-trained image-to-video diffusion model, the transition frames based on the third latent noises, the start frame, the end frame, the first caption, and the second caption

*FIG. 2*

FIG. 3

400

410
Latent noise generation module

402
Image embedding

406
De-noising inversion module

412
Latent noise

416-1
Latent noise

416-2
Latent noise

. . .

416-N
Latent noise

418
De-noising U-Net model

404
Image embedding

408
De-noising inversion module

414
Latent noise

*FIG. 4*

*FIG. 5*

600

610

Low-rank adaption module

602

Start frame

604

Caption

612

Low-rank adaption parameter

616-1

Low-rank adaption parameter

616-2

Low-rank adaption parameter

. . .

616-N

Low-rank adaption parameter

606

End frame

608

Caption

614

Low-rank adaption parameter

618

De-noising U-Net model

620

De-noising U-Net model

*FIG. 6*

700

710

Text embedding generation module

702

Start frame

704

Caption

712

Text embedding

716-1

Text embedding

718

De-noising U-Net model

716-2

Text embedding

. . .

716-N

Text embedding

706

End frame

708

Caption

714

Text embedding

**FIG. 7**

Object morphing

800

Input:

"a **cat** is sitting and facing to the right"

"a **dog** is sitting and facing forward"

Output:

*FIG. 8A*

810 — Motion prediction

Input:

"a woman is **swinging** on a swing"

"a woman has **swung** to the highest point on a swing"

Output:

EP 4 708 199 A1

**FIG. 8B**

820

Concept blending

Input:

"a **lion**"

"a **truck**"

Output:

EP 4 708 199 A1

**FIG. 8C**

*FIG. 8D*

*FIG. 9*

EP 4 708 199 A1

Europäisches
Patentamt
European
Patent Office
Office européen
des brevets

**EUROPEAN SEARCH REPORT**

Application Number

EP 25 20 0282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | Yang Zuhao ET AL: "Versatile Transition Generation with Image-to-Video Diffusion", , 3 August 2025 (2025-08-03), XP093354820, Retrieved from the Internet: URL:https://arxiv.org/abs/2508.01698 [retrieved on 2026-01-19] * the whole document * | 1-15 | INV. G06T11/00 G06T13/80 |
| X | ZHANG KAIWEN ET AL: "DiffMorpher: Unleashing the Capability of Diffusion Models for Image Morphing", 2024 IEEE/CVF CONFERENCE ON COMPUTER VISION AND PATTERN RECOGNITION (CVPR), IEEE, 16 June 2024 (2024-06-16), pages 7912-7921, XP034694546, DOI: 10.1109/CVPR52733.2024.00756 [retrieved on 2024-09-16] * abstract * * section 3 * * figures 1, 2 * | 1-15 | |
| X | CLINTON J WANG ET AL: "Interpolating between Images with Diffusion Models", ARXIV.ORG, CORNELL UNIVERSITY LIBRARY, 201 OLIN LIBRARY CORNELL UNIVERSITY ITHACA, NY 14853, 24 July 2023 (2023-07-24), XP091571594, | 1-4,8-15 | TECHNICAL FIELDS SEARCHED (IPC) G06T |
| A | * abstract * * section 4.1 * * figure 1 * | 5-7 | |

The present search report has been drawn up for all claims

| Place of search | Date of completion of the search | Examiner |
|---|---|---|
| Munich | 19 January 2026 | Engels, Angela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

27